# EUROPÄISCHE PATENTANMELDUNG

(11) **EP 1 614 528 A1**
(43) Veröffentlichungstag der Anmeldung: **11.01.2006**
(21) Anmeldenummer: 04405407.0
(22) Anmeldetag: 01.07.2004
(51) Int. Cl.: B32B 7/12

(54) **Verfahren zur Herstellung eines Verpackungsmaterials**

(71) Anmelder: Alcan Technology & Management Ltd., 8212 Neuhausen am Rheinfall (CH)
(72) Erfinder: Nägeli, Hans-Rudolf, 8212 Neuhausen (CH); Bruce, David, Maryport, CA15 6PU (GB); Hombach, Franz Peter, 8222 Beringen (CH)

(57) **Zusammenfassung**

Bei einem Verfahren zur Herstellung eines Verpackungsmaterials mit wenigstens zwei über wenigstens eine Klebstoffschicht (13) zu einem mehrschichtigen Laminat (10) verbundenen Filmen (12,16) oder Folien besteht wenigstens eine Klebstoffschicht (13) aus einem Elektronenstrahl härtenden Klebstoff und das Laminat (10) wird zum Aushärten des Klebstoffes mit Elektronen bestrahlt. Das Laminat eignet sich in besonderem Mass für die Fertigung von Beutelverpackungen, insbesondere für Snack Food. Die Laminatherstellung unter Verwendung Elektronenstrahl härtender Klebstoffe führt zu einer wesentlich verminderten Durchlaufzeit und zu einer Reduktion von Lösungsmittelemissionen beim Ersatz lösungsmittelbasierter Klebstoffe durch Elektronenstrahl härtende Klebstoffe.

## Beschreibung

Die Erfindung betrifft ein Verfahren zur Herstellung eines Verpackungsmaterials mit wenigstens zwei über wenigstens eine Klebstoffschicht zu einem mehrschichtigen Laminat verbundenen Filmen oder Folien, wobei die Klebstoffschicht/en ausgehärtet wird/werden. Im Rahmen der Erfindung liegt auch eine aus dem Laminat hergestellte Beutelverpackung.

Laminate zur Herstellung von Verpackungsbeuteln für Snack Food wie z.B. Chips oder Crackers werden heute durch Laminieren eines bedruckten orientierten Polypropylen (oPP)-Films mit einem metallisierten oPP-Film gefertigt. Hierbei wird der metallisierte oPP-Film mit einem im Konterdruckverfahren bedruckten und mit einem lösungsmittelfreien oder lösungsmittelbasierten Polyurethan (PUR)-Kleber beschichteten oPP-Film laminiert.

Das lösungsmittelfreie Herstellverfahren ist zwar umweltfreundlich, erfordert jedoch eine längere Aushärtungszeit. Der metallisierte oPP-Film wird mit einem bedruckten und mit einem lösungsmittelfreien Polyurethan (PUR)-Kleber beschichteten oPP-Film verklebt. Die endgültige Struktur ist: oPP-Film / Klebstoffschicht / oPP-Film. Nach dem abschliessenden Aushärten während mehreren Tagen kann das fertig gestellte Laminat zugeschnitten und an den Kunden verschickt werden. Die vom Auftragseingang bis zur Auslieferung des fertig konfektionierten Laminates benötigte Durchlaufzeit ist wesentlich von der Aushärtungsdauer der PUR-Klebstoffe abhängig.

Der Erfindung liegt die Aufgabe zugrunde, ein Verfahren der eingangs genannten Art bereitzustellen, mit welchem die Aushärtungsdauer der für die Laminierung benötigten Klebstoffe und damit die Durchlaufzeit gegenüber der herkömmlichen Laminatherstellung herabgesetzt werden kann.

Zur erfindungsgemässen Lösung der Aufgabe führt, dass die wenigstens eine Klebstoffschicht aus einem Elektronenstrahl härtenden Klebstoff besteht und das Laminat zum Aushärten des Klebstoffes mit Elektronen bestrahlt wird.

Die Strahlenhärtung von Elektronenstrahl härtenden Klebstoffen erfolgt beim Durchlauf durch eine Bestrahlungsstation innerhalb von Sekundenbruchteilen, wobei die endgültige Haftfestigkeit ohne zusätzliche Aushärtungsdauer im wesentlichen erreicht ist, wenn das Laminates aus der Bestrahlungsstation austritt und aufgewickelt wird.

Der Vorteil einer Laminatherstellung unter Verwendung Elektronenstrahl härtender Klebstoffe liegt nicht nur in einer wesentlich verminderten Durchlaufzeit, sondern auch in einer Reduktion von Lösungsmittelemissionen, wenn lösungsmittelbasierte Klebstoffe durch Elektronenstrahl härtende Klebstoffe ersetzt werden können.

Ein bevorzugtes Laminat weist zwei Filme oder Folien und eine Klebstoffschicht aus einem Elektronenstrahl härtenden Klebstoff auf

Bevorzugt werden die Klebstoffschichten aus einem Elektronenstrahl härtenden Klebstoff bei einer Hochspannung von 50 bis 125 kV, insbesondere 70 bis 100 kV, mit auf die Oberfläche des Laminates gerichteten Elektronenstrahlen mit einer Strahlendosis von 10 bis 50 kGy, vorzugsweise 20 bis 40 kGy, ausgehärtet.

Ein bevorzugtes Laminat weist die folgende Struktur auf: oPP-Film / Bedruckung / Klebstoffschicht aus einem Elektronenstrahl härtenden Klebstoff / oPP-Film.

Ein weiter bevorzugtes Laminat weist die folgende Struktur auf: oPP-Film / Bedruckung / Klebstoffschicht aus einem Elektronenstrahl härtenden Klebstoff / Barriereschicht / oPP-Film.

Die als Sperrschicht gegen Gase, Dämpfe und Feuchtigkeit dienende Barriereschicht ist beispielsweise eine Schicht aus keramischen Materialien, wie Silizium- oder Aluminiumoxid bzw. -nitrid, die in dünner Schicht, z.B. im Bereich von 10 - 500 nm, im Vakuum auf die Trägerfolie abgeschieden werden. Beispiele weiterer Sperrschichten sind metallische Schichten, z.B. aus Aluminium.

Im vorliegenden Fall ist insbesondere eine Metallisierung geeignet, dem Kunststofffilm und damit der Verpackungsfolie Barriereeigenschaften zu verleihen, welche den Durchtritt von Flüssigkeiten, Gasen, Dämpfen, Wasserdampf, Aromen oder Geruchsstoffen verhindern. Eine bevorzugte Metallisierung besteht aus Aluminium, welches beispielsweise durch Sputtern oder durch Abscheidung aus dem Vakuum in einer Dicke von etwa 10 nm bis etwa 2 µm auf den oPP-Film aufgetragen wird.

Bevorzugt ist der Elektronenstrahl härtende Klebstoff ein Klebstoff auf Acrylatbasis.

Der Klebstoff auf Acrylatbasis kann Monomere, Oligomere oder Mischungen von Monomeren und Oligomeren als Basiseinheiten enthalten. Beispiele von Monomeren sind mono-, di und multifunktionale Acrylate, wie Phosphorsäureesteracrylate, Hydroxyacrylate, Carboxyacrylate, Aminoacrylate, Acrylsäure und Acrylamid. Beispiele von Oligomeren sind Epoxyacrylate, Urethanacrylate, Polyesteracrylate, Siliconacrylate und Silanacrylate. Die erwähnten Monomeren und Oligomeren sind entweder im Handel erhältlich oder können mit Routineverfahren hergestellt werden. Der hier verwendete Begriff "Acrylat" (oder "Acryl") umfasst auch "Methacrylat" (oder "Methacryl"), wobei die Acrylate bevorzugt sind.

Das erfindungsgemäss hergestellte Laminat eignet sich in besonderem Mass für die Fertigung von Beutelverpackungen, insbesondere Beutelverpackungen für Snack Food.

Weitere Vorteile, Merkmale und Einzelheiten ergeben sich aus der nachfolgenden Beschreibung bevorzugter Ausführungsbeispiele sowie anhand der Zeichnung; diese zeigt schematisch in
- Fig. 1 den Querschnitt durch eine laminierte Verpackungsfolie;
- Fig. 2 die Herstellung der Verpackungsfolie von Fig. 1.

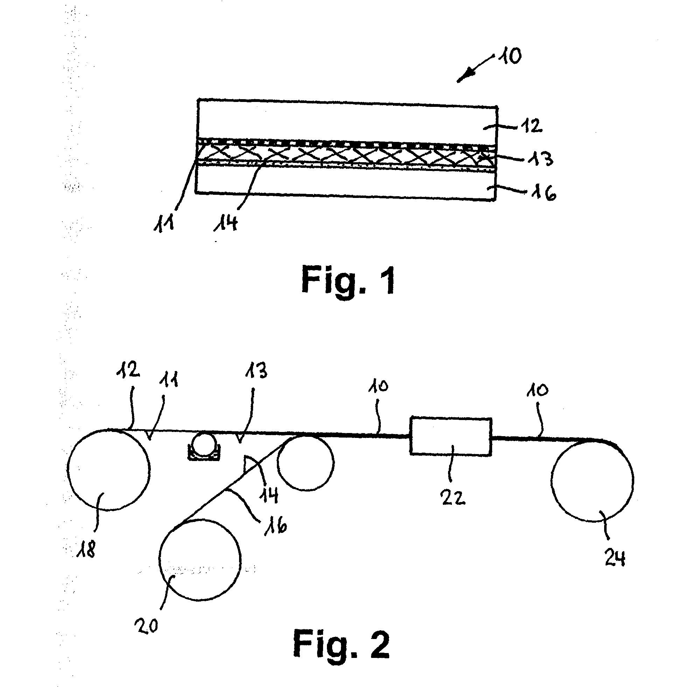

Eine in Fig. 1 gezeigte Verpackungsfolie 10 zur Herstellung von Verpackungsbeuteln für Snack Food wie beispielsweise Chips oder Crackers weist einen im Konterdruckverfahren mit einer Bedruckung 11 versehenen oPP-Film 12 als Aussenseite und einen siegelfähigen oPP-Film 16 mit einer Barriereschicht 14 in der Form einer Aluminiumaufdampfschicht als Innenseite auf. Der aussenseitige oPP-Film 12 ist mit dem innenseitigen oPP-Film 16 über eine Klebstoffschicht 13 aus einem Elektronenstrahl härtenden Klebstoff permanent verbunden. Die Bedruckung 11 und die Barriereschicht 14 befinden sich zwischen den beiden oPP-Filmen 12, 16 im Inneren der Verpackungsfolie 10, d.h. die Klebstoffschicht 13 steht in direktem Kontakt mit der Bedruckung 11 und der Barriereschicht 14. Bei einer typischen Verpackungsfolie 10 beträgt die Dicke der oPP-Filme beispielsweise etwa 12-20 µm.

Fig. 2 zeigt die Herstellung einer Verpackungsfolie 10 bestehend aus dem im Konterdruckverfahren bedrucktem oPP-Film 12, der Klebstoffschicht 13 und dem oPP-Film 16 mit der Barriereschicht 14. Der bedruckte oPP-Film 12 wird als Band von einer ersten Wickelrolle 18 abgewickelt und kontinuierlich mit Klebstoff 13 beschichtet. Von einer zweiten Wickelrolle 20 wird der mit der Aluminiumaufdampfschicht als Barriereschicht 14 versehene oPP-Film 16 als Band an den bedruckten, mit Klebstoff 13 beschichteten oPP-Film 12 herangeführt und mit diesem kontinuierlich zur Verpackungsfolie 10 laminiert. Die Verpackungsfolie 10 durchläuft eine Bestrahlungsstation 22, in welcher die Klebstoffschicht 13 in einem Bruchteil einer Sekunde durch Elektronenstrahlhärtung aushärtet. Hierbei werden die Verfahrensparameter, d.h. die Hochspannung und die Strahlendosis, so eingestellt, dass eine zur Aushärtung des Klebstoffes ausreichende Strahlendosis in die Klebstoffschicht 13 eingetragen wird, aber nur eine geringe Strahlendosis den zur Siegelung vorgesehenen oPP-Film 16 negativ beeinflusst. Nach dem Austritt aus der Bestrahlungsstation 22 wird die Verpackungsfolie 10 auf eine dritte Wickelrolle 24 aufgewickelt.

Die Verpackungsfolie 10 mit der vollständig ausgehärteten Klebstoffschicht 13 kann unmittelbar nach dem Aufwickeln auf die Wickelrolle 24 auf einer Schneidvorrichtung in versandfertige Einheiten handelsüblicher Breite unterteilt werden.

Es versteht sich von selbst, dass bei der Verklebung der Filme oder Folien in den vorstehend beschriebenen Laminierverfahren der Klebstoff auch auf die jeweils anderen als die in den Beispielen gewählten Filme oder Folien aufgetragen werden kann.

## Patentansprüche

1. Verfahren zur Herstellung eines Verpackungsmaterials mit wenigstens zwei über wenigstens eine Klebstoffschicht zu einem mehrschichtigen Laminat (10) verbundenen Filmen (12,16) oder Folien, wobei die Klebstoffschicht/en (13) ausgehärtet wird/werden,
**dadurch gekennzeichnet, dass**
wenigstens eine Klebstoffschicht (13) aus einem Elektronenstrahl härtenden Klebstoff besteht und das Laminat zum Aushärten des Klebstoffes mit Elektronen bestrahlt wird.

2. Verfahren nach Anspruch 1, **dadurch gekennzeichnet, dass** das Laminat (10) zwei Filme (12,16) oder Folien und eine Klebstoffschicht (13) aus einem Elektronenstrahl härtenden Klebstoff aufweist.

3. Verfahren nach Anspruch 1 oder 2, **dadurch gekennzeichnet, dass** die Klebstoffschicht/en (13) aus einem Elektronenstrahl härtenden Klebstoff bei einer Hochspannung von 50 bis 125 kV, vorzugsweise 70 bis 100 kV, mit auf die Oberfläche des Laminates (10) gerichteten Elektronenstrahlen mit einer Strahlendosis von 10 bis 50 kGy, vorzugsweise 20 bis 40 kGy, ausgehärtet werden.

4. Verfahren nach Anspruch 2 oder 3, **dadurch gekennzeichnet, dass** das Laminat (10) die folgende Struktur aufweist: oPP-Film (12) / Bedruckung (11) / Klebstoffschicht (13) aus einem Elektronenstrahl härtenden Klebstoff / oPP-Film (16).

5. Verfahren nach Anspruch 2 oder 3, **dadurch gekennzeichnet, dass** das Laminat (10) die folgende Struktur aufweist: oPP-Film (12) / Bedruckung (11) / Klebstoffschicht (13) aus einem Elektronenstrahl härtenden Klebstoff / Barriereschicht (14) / oPP-Film (16).

6. Verfahren nach Anspruch 6, **dadurch gekennzeichnet, dass** die Barriereschicht (14) eine Aufdampfschicht aus einem Metall, insbesondere eine Aluminiumaufdampfschicht ist.

7. Verfahren nach einem der Ansprüche 1 bis 6, **dadurch gekennzeichnet, dass** die Klebstoffschicht (13) aus einem Elektronenstrahl härtenden Klebstoff aus einem Klebstoff auf Acrylatbasis besteht.

8. Beutelverpackung aus einem Laminat (10) hergestellt mit dem Verfahren nach einem der Ansprüche 1 bis 7.
